# EUROPEAN PATENT SPECIFICATION

(11) **EP 1 013 958 B1**
(45) Date of publication and mention of the grant of the patent: **25.08.2004**
(21) Application number: 00106942.6
(22) Date of filing: 20.06.1996
(51) Int. Cl.: F16D 65/56

(54) **Brake and actuator therefor**
Bremse sowie Betätigungsvorrichtung hierfür
Frein et son actionneur

(30) Priority: 20.06.1995 GB 9512522; 15.02.1996 GB 9603159
(43) Date of publication of application: 28.06.2000
(62) Divisional of application: 96918771.5
(73) Proprietor: Meritor Heavy Vehicle Braking Systems (UK) Limited, Reading, Berkshire RG6 1LA (GB)
(72) Inventor: Sturgess, Peter George, Newport, Gwent NP9 5HG (GB); Trott, Phillip Leonard, Blaenavon, Gwent NP4 9NG (GB)
(74) Representative: Jones, John Bryn

(56) References cited:
- EP-A- 0 139 445
- EP-A- 0 225 764
- WO-A-93/21454
- WO-A-93/22579

## Description

This invention relates to a disc brake, primarily for a motor vehicle, including an actuator device operable, via at least one force transmission device, to move a friction element of the brake, in use, into engagement with a rotary brake disc, the force transmission device being of automatically adjustable length and acting to compensate for wear of the friction elements.

In one known arrangement illustrated in WO93/22579, a pair of force transmission devices is provided, each of which is in the form of a strut having a pair of threadedly interengaged strut parts, the length of each strut being variable, for wear compensation, by relative rotation of the interengaged strut parts. One strut part in each device carries an integral head via which actuating force is applied, in use, to the friction element and a protective boot is connected between each head and a fixed part of the brake. An arrangement of this kind can be inconvenient in that in order to remove the boot for service or repair, it is necessary either to stretch the boot over the head, risking damage to the boot, or at least partially to dismantle the strut to permit removal of the boot along the strut part carrying the head. Removal of the boot may be facilitated by providing a detachable head, as is well known in the art.

A further problem encountered in some conventional brakes incorporating extendable struts is that retraction of the struts to permit replacement of the friction elements and other servicing operations can result in adjacent surfaces of the strut parts locking together in the retracted condition, possibly leading to incorrect operation of the strut following the servicing procedure.

EP-A-0 139 445 discloses a disc brake in which the retraction movement of the extendable strut is stopped by a surface of the housing.

An object of the present invention is to facilitate the provision of a disc brake in which the respective requirements for a detachable head on a strut part and for a stop which reduces the risk of locking of the strut parts are addressed in a simple and convenient manner.

In accordance with the present invention, there is provided a disk brake as claimed in Claim 1.

The invention will now be described, by way of example, with reference to the accompanying drawings in which:-
Figure 1 is a view from above, in transverse cross-section, of one form of the brake of the invention and its actuator;
Figure 2 is an enlarged exploded perspective view of a component of the brake of Figure 1;
Figure 3 is an enlarged cross-sectional view of part of the brake of Figure 1;
Figure 4 is an enlarged perspective view of another component of the brake of Figure 1;
Figure 5 is a view from above, in transverse cross-section, of an alternative form of the brake of the invention and its actuator;
Figure 6 illustrates the brake of Figure 5 in a condition prior to assembly of certain components thereof, and
Figure 7 is a cross-sectional detail illustrating a modified component of the brake of Figures 5 and 6.

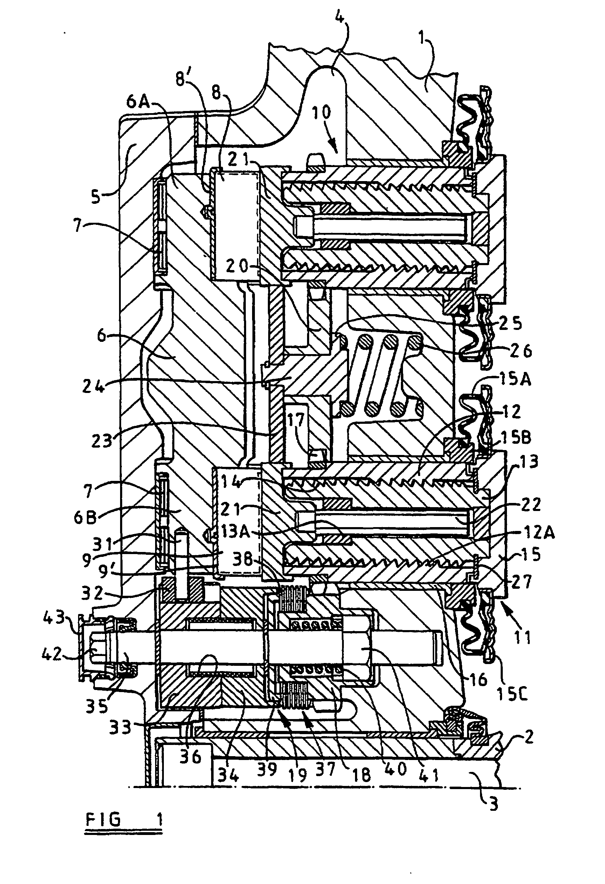

Referring to Figure 1 in detail, this illustrates a sliding caliper 1 of a disc brake mounted relative to a fixed carrier 2 in conventional manner by guide pins, of which one is illustrated at 3. The caliper 1 defines a chamber 4, closed by an end cover 5, housing an actuator and adjuster mechanism to be described in detail hereafter.

The actuator is of a type, similar to that disclosed, for example in WO93/22579, as will be understood by one versed in the art, and includes a rotary member 6, rotatable, in use, by a conventional power device, such as an air actuator (not shown), the member 6 being rotationally supported against the cover 5 by way of needle bearings 7. Portions 6A, 6B of the member 6 locate respective cylindrical rollers 8, 9, which are seated in respective part-cylindrical bearings 8', 9'. The axes of the rollers 8 and 9 and the portions 6A, 6B are offset from one another and form an eccentric arrangement with the rollers 8 and 9 bearing against adjacent adjustable force transmitting devices in the form of tappet assemblies 10, 11.

The tappet assemblies are identical and only the assembly 11 will be described in detail. This assembly comprises an outer sleeve 12 which is internally threaded at 12A over a part of its length and within which is contained a shaft 13 having a complementary external thread 14 over substantially its entire length engaged with the sleeve thread 12A. The shaft 13 is provided at its outer end with a tappet head 15 which is releasably coupled to the shaft so as, conveniently, to be freely rotatable relative to the latter by means which will be described in detail hereafter. The sleeve 12 is rotatably mounted in the caliper body 1 by way of a low friction bearing sleeve 16 and is provided with an external gear form 17 which may be either a separate component firmly secured to the sleeve, as illustrated, or a formation integral with the latter. The gear form 17 meshes with a corresponding formation on a gear wheel 18 forming part of an adjuster mechanism indicated generally at 19 and also with an intermediate gear 20 which is freely rotatably mounted and located between the tappet assemblies 10 and 11.

A head in the form of an end abutment 21 is engaged over the end of the sleeve 12 opposite to that carrying the tappet head 15 and is rigidly connected to or integral with a pin 22 which extends within the shaft 13 and has a non-circular shape engaging within a relatively short insert 13A non-rotatably mounted within the shaft. The pin 22 provides a guide for the shaft 13 during axial movement of the shaft between extreme retracted and extended positions thereof, and also serves to lock the shaft 13 against rotation. For this purpose, in the embodiment described, the pin 22 is of part-circular cross-section with a pair of opposed flats 22A for engagement with corresponding flats within the insert. The pin 22 and insert 13A may alternatively be non-rotatably interconnected by way of other suitable formations providing the necessary non-rotational connection whilst permitting axial sliding of the shaft 13 along the pin. It can be seen that the abutment 21 is keyed by the pin 22 and insert 13A against rotation relative to the shaft 13 and the abutment is itself prevented from rotation by engagement with a plate member 23 which also engages, in similar manner, a corresponding abutment 21 on the other tappet assembly 10, as will be further described. The plate member 23 carries a shaft in the form of a pin 24 which rotatably mounts the intermediate gear 20, a radial flange 25 of the pin providing an abutment for one end of a tappet return spring 26, the other end of which bears against an internal surface of the housing 1.

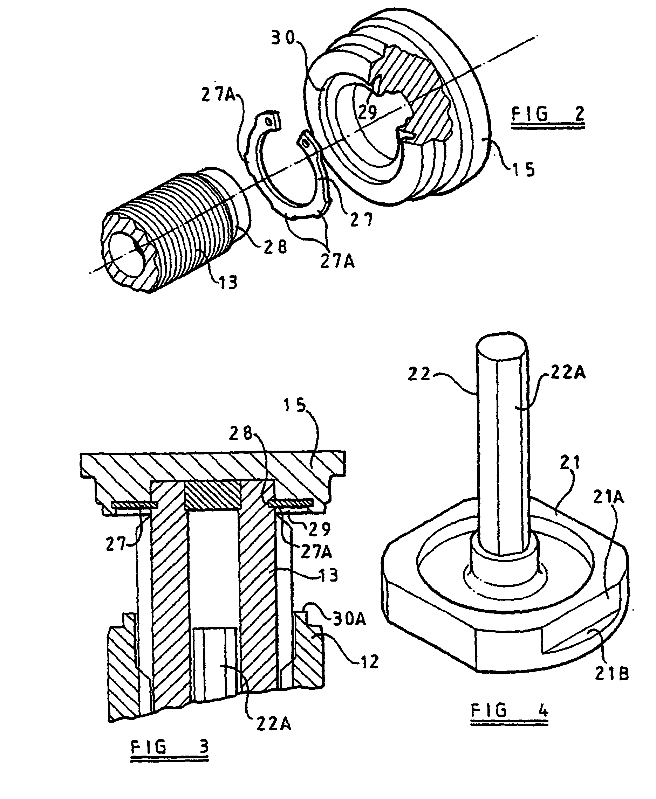

The manner of connecting the tappet head 15 to the shaft 13 is illustrated in more detail in Figures 2 to 4. The connection is effected by way of a circlip 27 housed within a groove 28 of the shaft 13 and engaged behind a shoulder 29 of the tappet head. Figure 2 illustrates the component positions prior to assembly. The circlip is first inserted within the groove 28, which is relatively deep to permit compression of the circlip therein beyond its normal rest position. The circlip is provided with three or more peripherally spaced tags 27A which, when the tappet head is placed on the shaft and moved axially therealong, ride up a ramp 30 formed on the forward edge of the shoulder 29 which acts to press the circlip inwardly into the groove until it moves past the shoulder, whereupon the circlip resiliently recovers to become lodged behind the shoulder 29 and thereby provide the desired connection which normally precludes axial removal of the tappet head whilst permitting free rotation thereof relative to the shaft. The two components may be separated relatively easily, for servicing purposes for example, by compressing the circlip radially inwardly in conventional manner.

Protection against the ingress of foreign material may conveniently be provided by a protective boot 15A secured around one of its peripheral extremities to the housing by way of an anchoring device 15B and around its other peripheral extremity to the tappet head 13 which carries a boot-protecting plate 15C. An advantage of making the tappet head detachable is that attachment and removal of the boot are facilitated and the risk of damaging the boot during its fitting and removal is much reduced.

The primary advantage afforded by the invention, however, is that the circlip 27 used to secure the head 15 in place serves as a stop cooperating with an abutment 30A, shown as formed by the end of the sleeve 12, in order to limit retraction of the shaft 13 within the sleeve 12 when the tappets are de-adjusted for friction pad replacement and/or general servicing of the brake. This stop arrangement simplifies the assembly considerably by making use of an existing component to serve as the stop.

With further reference to Figure 1 in conjunction with Figure 4 the plate member 23 is forked at both of its ends and dimensioned so as partially to embrace the abutment 21 and engage respective flats A formed on opposed sides of the abutment, as well as engaging adjacent axially facing surfaces 21 B. By virtue of this arrangement, the force of the return spring 26 is applied, via the flange 25 of the pin 24 and the pin itself to the plate 23 and thence to the abutment 21 and the roller 9 engaged therewith. It will therefore be seen that the return spring force bypasses the gear wheel 20 and consequently the shaft 13 and sleeve 12 so that the frictional resistance occurring in the tappet assemblies 10,11 is very much reduced as compared with some conventional arrangements.

The automatic adjuster mechanism 19 operates to lengthen the tappet assembly 11 to compensate for wear of the brake friction linings, the adjuster acting on the sleeve 12 of the tappet and, via the gear wheel 20, on the corresponding sleeve in the identical tappet 10. The eccentric member or shaft 6 is linked to the adjuster by way of a pin 31 forming a connection between the shaft 6 and a bush 32 of the adjuster. The bush 32 is coupled to a drive sleeve assembly comprising two generally cylindrical components 33, 34 arranged in axial succession around an adjuster shaft 35, the components being frictionally interconnected by way of a wrap spring 36 arranged to engage respective internal surfaces of the components. A multi-plate clutch assembly, illustrated generally at 37, has one set of plates coupled to a cylindrical extension 38 of the component 34 and its other set of plates connected to an intermediate component 39 mounted on the shaft 35. The multi-plate clutch is also in driving engagement with the gear wheel 18 referred to previously, the clutch being pre-loaded by a spring 40. The normal running clearance of the brake is provided for by clearance between the component 34 and the part of the clutch 37 engaged therewith. The shaft 35 is provided with an inner hexagon formation 41 engaged with a corresponding internal formation within the gear wheel 18 and the shaft thus rotates permanently with the gear wheel. The outer end of the shaft 35 is provided also with a drive formation 42 which, in this embodiment, is hexagonal. This formation is normally disposed within a protective cap 43 which is securely mounted in the housing and removable to permit adjusting rotation of the shaft by way of the drive formation 42.

Actuation of the brake by rotation of the eccentric shaft 6 results in rotation of the sleeve components 33, 34 and if the movement of the tappets does not exceed the nominal brake clearance, as would be the case for example with the linings in new condition, the sleeves will merely move by the amount of the built-in clearance and return to their original positions, without adjustment taking place. When friction lining wear results in rotational movement of the sleeve 34 by an amount greater than the built-in clearance, the clutch is caused to rotate, together with the intermediate component 39 and the gear wheel 18, thereby rotating the tappet sleeves 12 in a direction such as to wind out the shafts 13 and thereby lengthen the strut assemblies by an amount equal to the excess actuator movement. If the caliper is subjected to loads high enough to cause deflection of the brake components, operation of the adjustment will be prevented by slipping of the multi-plate clutch at a predetermined torque representing a maximum permitted load.

Release of the brake results in return movement of the tappets under the action of the return spring 26, such return movement being accompanied by slipping of the multi-plate clutch until the applied torque is such that the clutch is held in its non-slipping condition. Continued rotation of the sleeves 33, 34 enables the brake clearance to be reset and, if adjustment has occurred, the final part of the return stroke of the eccentric shaft 6 will be accompanied by relative slipping between the components 33, 34, as permitted by the wrap spring. The mechanism is thereby set for a subsequent brake application.

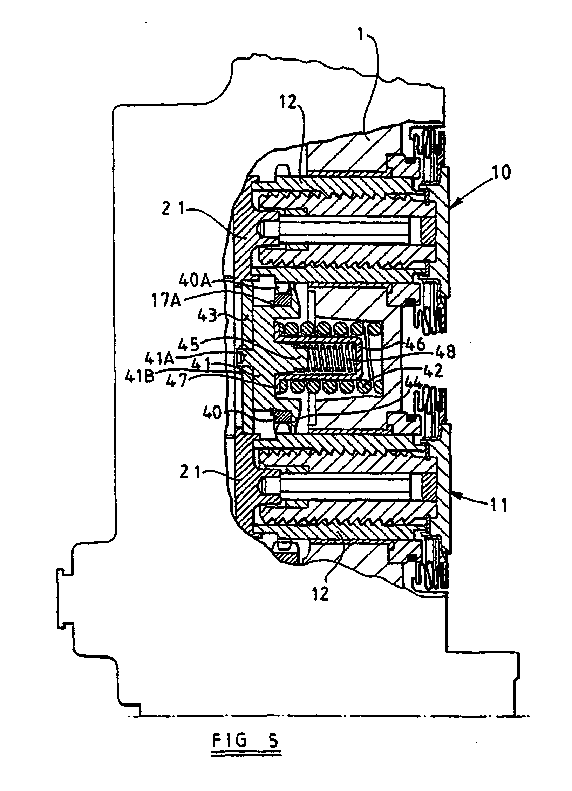

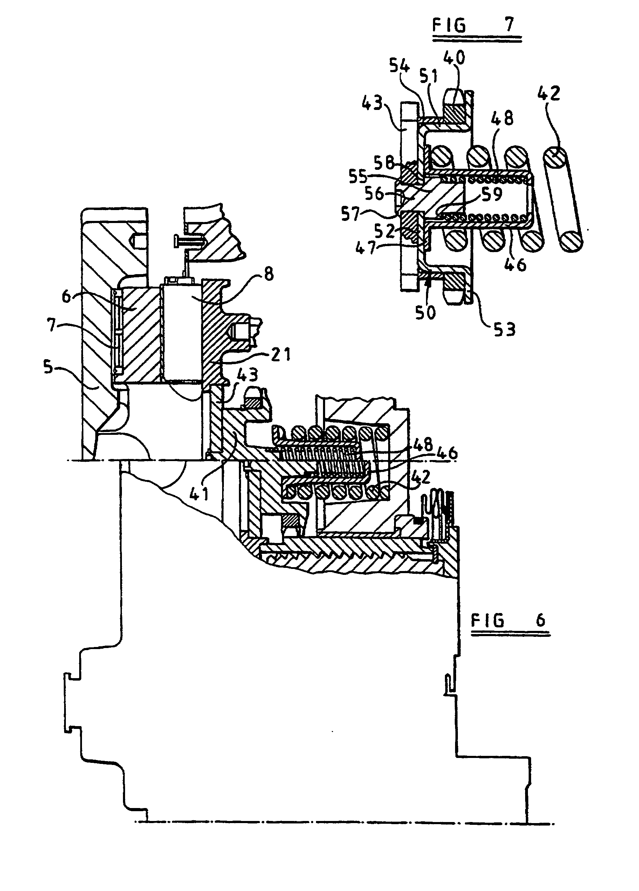

The disc brake illustrated in Figures 5 and 6 is similar to that of Figures 1 to 4 and generally includes a caliper 1 slidably mounted relative to a fixed carrier and by guide pins, and housing an actuator and adjuster mechanism, as previously.

This embodiment differs from the previous one, at least so far as concerns the mechanism interconnecting the sleeves 12 of the tappet assemblies 10, 11 so that rotary movement applied to one sleeve is transmitted to the other. This is again effected by way of an intermediate gear 40 which is freely rotatably mounted between the tappet assemblies 10 and 11 and has teeth 40A complementary to and meshing with those on the sleeves 12 of those assemblies. The intermediate gear 40 is journalled on a hub 41 urged firmly by a spring 42 against an anti-rotation plate 43 engaged against respective abutments 21 of the assemblies 11, 12. A spigot 41A extends through an opening in the plate 43 and a circlip 41 B anchors the hub to the plate. The diameter of the hub 41 is such that the hub covers a major part of the adjacent surface of the plate 43, thereby to spread the load of the spring 42 over a relatively large support area. The end of the hub beyond the gear 40 in the direction away from the plate 43 is provided with a radially outwardly extending flange 44 between which and a snap ring 17A the gear is retained in position. Alternatively, the flange could be formed by a separate washer and snap-ring arrangement. It will be appreciated that any asymmetric loading of the gear 40 during operation of the adjuster assemblies will be resisted by the opposed flange and a large area of the plate 43, resulting in a mechanism providing good stability under extreme operating conditions.

The hub 41 has a central axial stem 45 housed within a cylindrical can 46, the lower end of which, as seen in the drawing, has a radially outwardly extending flange 47 against which bears the lower end of the spring 42. A further smaller spring 48 is housed within the can and surrounds the upper end portion of the stem 45, and, depending upon the method of assembly, may or may not be firmly secured to the latter. This spring 48 takes no part in the operation of the mechanism, but serves to provide stability to part of the mechanism during its assembly into the housing, as will be described hereafter.

The upper portion of Figure 6 illustrates components of the brake prior to assembly of the cover plate 5 on to the brake body 1. It can be seen that the lever 6 and its bearings 7, together with the roller 8, the abutment 21 of the tappet assembly 11 and the anti-rotation plate 43 are assembled between the cover plate 5 and hub 41. Prior to assembly the latter is urged by the smaller spring 48 to a position axially displaced from its normal position in the assembled brake and the can 46 is displaced by the large spring 42 in the same direction until this spring has expanded to its full free length, as illustrated. The force of the spring 48 is thus transmitted through the hub and anti-rotation plate on to the component 21, and thereby serves to hold the components 6, 7 and 8 against the cover plate. This has the effect of stabilising these part-assembled components while the cover plate is offered to the housing. As the hub is urged towards its normal position of use in the housing by pressure on the cover plate, the small spring 48 is compressed and the large spring 42 finally takes over to perform its operational function, as hereinbefore described, once the cover plate 5 has been secured in position on the housing.

Figure 7 illustrates a modification in which the hub 41 is replaced by a generally cylindrical element 50 of thin gauge metal or plastics material. The cylindrical wall 51 thereof fits closely within the gear 40 and acts as a journal for the latter. A base 52 of the element lies against the adjacent surface of the plate 43 over substantially the whole area of this surface. The force of the spring 42 acting on the base 52 by way of the flange 47 of the can 46 is transmitted to the base and thence to the plate 43. In this embodiment, the gear 40 is supported between a radial flange 53 of the element and a spacer ring 54 of metal or plastics material. A separate stem 55 is provided having a cylindrical portion 56 extending through an opening in the plate 43 and being secured to the latter by, for example, peening its free end at 57 against the plate. The plate 43 and base 52 of the element 50 are trapped between a first shoulder 58 of the stem and the peened end portion of the latter. The smaller spring 48 is disposed between a further shoulder 59 of the stem and the can 46. Operation of this embodiment is similar to that of Figures 5 and 6 and has the advantage of providing additional cost-effectiveness as compared with the embodiment of Figures 5 and 6.

## Claims

1. A disc brake comprising a housing containing, in use, at least one friction element, an actuator device (6, 8, 9) operable via at least one force transmission device (10, 11) to move the friction element into engagement with a rotary brake disc, the or each force transmission device (10, 11) being automatically adjustable to compensate for wear of the friction element and having an end member (15) at the exterior of the housing in force transmitting relationship with the friction element, the end member (15) being releasably secured to the force transmission device (10, 11) by a retention member (27) which is arranged to serve also as a stop for co-action with a surface (30A) of the force transmission device (10, 11) to limit the fully de-adjusted length of the force transmission device (10, 11).

2. A disc brake according to Claim 1, wherein the or each force transmission device (10,11) is in the form of a strut including a pair of co-operating parts (12,13) which are relatively moveable to provide the adjustment by varying the length of the strut, the end member (15) being secured by the retention member (27) to one of the parts (13) of the strut and the surface (30A) co-acting with the retention member (27) being on the other part (12) of the strut.

3. A disc brake according to Claim 2, wherein the co-acting surface (30A) is an axially facing surface of the other part (12) of the strut.

4. A disc brake according to Claim 3, wherein the axially facing surface (30A) is an end face of the other part (12) of the strut.

5. A disc brake according to any one of Claims 2 to 4, wherein the pair of co-operating parts (12,13) are threadedly inter-engaged and the length of the strut is varied by relative rotation of the components effected by a co-operating automatic adjuster device (19) operable in response to excessive wear of the friction element.

6. A disc brake according to any one of the preceding claims, wherein the retention member (27) is a snap-engagable element received in a groove arrangement (28,29,30) of the associated components (15,10,11).

7. A disc brake according to Claim 5, including at least two said force transmission devices (10,11), wherein one of the strut parts (12,13) of each force transmission device (10,11) is held against rotation by co-operation with a respective abutment member (21) engaged with part of the actuator device (6,8,9), the abutment members (21) being themselves held against rotation by a support device (23) serving to mount a shaft (24,45,55) carrying an intermediate gear (20,40) interconnecting corresponding rotatable parts (12) of the struts whereby rotation of one of the parts (12) is transmitted to the other part (12).

## Patentansprüche

1. Scheibenbremse mit einem Gehäuse, das im Betrieb mindestens ein Reibungselement enthält, eine Stellantriebsvorrichtung (6, 8, 9), die über mindestens eine Kraftübertragungsvorrichtung (10, 11) betätigt werden kann, um das Reibungselement mit einer Rotationsbremsscheibe in Angriff zu bewegen, wobei die oder jede Kraftübertragungsvorrichtung (10, 11) automatisch justierbar ist, um den Verschleiß des Reibungselementes zu kompensieren, und ein Endelement (15) außerhalb des Gehäuses besitzt, das mit dem Reibungselement in Kraft übertragender Verbindung steht, wobei das Endelement (15) mit Hilfe eines Halteelements (27), das so angeordnet ist, dass es auch als Anschlag zum Zusammenwirken mit einer Oberfläche (30A) der Kraftübertragungsvorrichtung (10, 11) dient, um die Länge der völlig dejustierten Kraftübertragungsvorrichtung (10, 11) zu begrenzen, lösbar an der Kraftübertragungseinrichtung (10, 11) befestigt ist.

2. Scheibenbremse nach Anspruch 1, bei der die oder jede Kraftübertragungsvorrichtung (10, 11) die Form einer Strebe hat, welche zwei zusammenwirkende Teile (12, 13) aufweist, die relativ zueinander beweglich sind, um das Justieren durch Variation der Strebenlänge vorzusehen, wobei das Endelement (15) durch das Halteelement (27) an einem der Teile (13) der Strebe befestigt ist und die Oberfläche (30A), die mit dem Halteelement (27) zusammenwirkt, auf dem anderen Teil der Strebe (12) liegt.

3. Scheibenbremse nach Anspruch 2, bei der die mitwirkende Oberfläche (30A) eine axial gerichtete Oberfläche des anderen Teils (12) der Strebe ist.

4. Scheibenbremse nach Anspruch 3, bei der die axial gerichtete Oberfläche (30A) eine Endfläche des anderen Teils (12) der Strebe ist.

5. Scheibenbremse nach einem der Ansprüche 2 bis 4, bei der die zwei zusammenwirkenden Teile (12, 13) ineinander geschraubt sind und die Länge der Strebe durch Drehung der Bestandteile relativ zueinander variiert wird, die von einer mitwirkenden, automatischen Justiervorrichtung (19) ausgeführt wird, welche als Reaktion auf übermäßigen Verschleiß des Reibungselementes betätigt werden kann.

6. Scheibenbremse nach einem der vorhergehenden Ansprüche, bei der das Halteelement (27) ein Element ist, das einschnappen kann und in einer Rillenanordnung (28, 29, 30) der zugehörigen Bestandteile (15, 10, 11) aufgenommen wird.

7. Scheibenbremse nach Anspruch 5, die mindestens zwei Kraftübertragungsvorrichtungen (10, 11) aufweist, bei der eines der Strebenteile (12, 13) jeder Kraftübertragungsvorrichtung (10, 11) durch Zusammenwirken mit einem jeweiligen Anlageelement (21), das mit Teil der Betätigungsvorrichtung (6, 8, 9) in Eingriff steht, gegen Drehung gehalten wird, wobei die Anlageelemente (21) selbst gegen Drehung gehalten werden durch eine Tragevorrichtung (23), die dazu dient, eine Welle (24, 45, 55) anzubringen, die ein Zwischenzahnrad (20, 40) trägt, welches entsprechende drehende Teile (12) der Strebe miteinander verbindet, wodurch die Drehung eines der Teile (12) zu dem anderen Teil (12) übertragen wird.

## Revendications

1. Frein à disque comprenant un logement contenant, en fonctionnement, au moins un élément de friction, un dispositif d'actionnement (6, 8, 9) pouvant être mis en oeuvre par l'intermédiaire d'au moins un dispositif de transmission de force (10, 11) pour déplacer l'élément de friction en prise avec un disque de frein rotatif, le ou chaque dispositif de transmission de force (10, 11) étant réglable automatiquement pour compenser l'usure de l'élément de friction et comportant un élément d'extrémité (15) à l'extérieur du logement dans une relation de transmission de force avec l'élément de friction, l'élément d'extrémité (15) étant fixé de manière libérable au dispositif de transmission de force (10, 11) par un élément de retenue (27) qui est agencé pour servir également de butée pour une action conjointe avec une surface (30A) du dispositif de transmission de force (10, 11) afin de limiter la longueur totalement déréglée du dispositif de transmission de force (10, 11).

2. Frein à disque selon la revendication 1, dans lequel le ou chaque dispositif de transmission de force (10, 11 ) a la forme d'un montant comprenant deux parties coopérantes (12, 13) qui sont mobiles de manière relative afin d'assurer le réglage en modifiant la longueur du montant, l'élément d'extrémité (15) étant fixé par l'élément de retenue (27) à l'une des parties (13) du montant et la surface (30A) agissant conjointement avec l'élément de retenue (27) se trouvant sur l'autre partie (12) du montant.

3. Frein à disque selon là revendication 2, dans lequel la surface agissant conjointement (30A) est une surface orientée axialement de l'autre partie (12) du montant.

4. Frein à disque selon la revendication 3, dans lequel la surface orientée axialement (30A) est une face d'extrémité de l'autre partie (12) du montant.

5. Frein à disque selon l'une quelconque des revendications 2 à 4, dans lequel les deux parties coopérantes (12, 13) sont en prise mutuelle par filetage et la longueur du montant est modifiée par une rotation relative des composants effectuée par un dispositif de réglage automatique coopérant (19) pouvant être mis en oeuvre en réponse à une usure excessive de l'élément de friction.

6. Frein à disque selon l'une quelconque des revendications précédentes, dans lequel l'élément de retenue (27) est un élément encliquetable reçu dans un agencement de gorges (28, 29, 30) des composants associés (15, 10, 11).

7. Frein à disque selon la revendication 5, comprenant au moins deux desdits dispositifs de transmission de force (10, 11), dans lequel la rotation de l'une des parties de montant (12, 13) de chaque dispositif de transmission de force (10, 11) est empêchée par une coopération avec un élément de butée (21) respectif en prise avec une partie du dispositif d'actionnement (6, 8, 9), la rotation des éléments de butée (21) eux-mêmes étant empêchée par un dispositif de support (23) servant au montage d'un arbre (24, 45, 55) supportant un engrenage intermédiaire (20, 40) reliant des parties rotatives (12) correspondantes des montants, moyennant quoi la rotation d'une des parties (12) est transmise à l'autre partie (12).
